(19) Europäisches Patentamt

European Patent Office

Office européen des brevets

(11) **EP 0 831 626 B1**

(12) **FASCICULE DE BREVET EUROPEEN**

(45) Date de publication et mention
de la délivrance du brevet:
**16.07.2003 Bulletin 2003/29**

(51) Int Cl.⁷: **H04L 27/233**

(21) Numéro de dépôt: **97402188.3**

(22) Date de dépôt: **19.09.1997**

(54) **Procédé et dispositif pour déterminer l'erreur sur la fréquence d'une porteuse**

Verfahren und Vorrichtung zum Ermitteln eines Trägerfrequenz-Fehlers

Method and system for determining a carrier frequency error

(84) Etats contractants désignés:
**DE GB IT**

(30) Priorité: **23.09.1996 FR 9611554**

(43) Date de publication de la demande:
**25.03.1998 Bulletin 1998/13**

(73) Titulaire: **FRANCE TELECOM**
**75015 Paris (FR)**

(72) Inventeurs:
• **Mortensen, Ivar**
**70825 Korntal (DE)**
• **Boucheret, Marie-Laure**
**31120 Goyrans (FR)**
• **Favaro, Henri**
**31570 Ste Foy d'Aigrefeuille (FR)**
• **Belis, Eric**
**31000 Toulouse (FR)**

(74) Mandataire: **Fréchède, Michel**
**Cabinet Plasseraud**
**84, rue d'Amsterdam**
**F-75440 Paris Cédex 09 (FR)**

(56) Documents cités:
**EP-A- 0 373 405    US-A- 5 062 123**
**US-A- 5 373 247**

• **HAEB R. ET AL.: "A DIGITAL SYNCHRONIZER FOR LINEARLY MODULATED SIGNALS TRANSMITTED OVER A FREQUENCY-NONSELECTIVE FADING CHANNEL" IEEE INTERNATIONAL CONFERENCE ON COMMUNICATIONS, PHILADELPHIA, vol. 2, 12 - 15 juin 1988, INSTITUTE OF ELECTRICAL AND ELECTRONICS ENGINEERS, pages 1012-1016, XP000012468**

# Description

La présente invention concerne un procédé et un dispositif de détection de l'erreur sur la fréquence d'une porteuse.

Elle trouve une application importante dans les systèmes de démodulation cohérente de signaux modulés en phase, c'est-à-dire notamment des signaux dits MDP (ou PSK en terminologie anglo-saxonne). Par exemple, elle peut être utilisée dans un dispositif de réception numérique d'une liaison radiofréquence ou d'une liaison optique.

US 5 062 123 décrit une méthode de suppression des perturbations de la phase d'un signal en utilisant un filtre de Kalman. Cette méthode récurrente procède tout d'abord par l'évaluation de l'écart entre la valeur instantanée de la phase et une estimation de cette valeur instantanée déduite de valeurs antérieures déjà partiellement dépourvues de perturbations. Elle combine ensuite cet écart auquel est appliqué facteur variable avec une estimation antérieure de la valeur instantanée de la phase, déjà relativement dépourvue de perturbations.

La récupération de la fréquence de la porteuse est nécessaire à la démodulation cohérente des signaux transmis par modulation de phase de la porteuse. Dans les dispositifs de réception analogiques, cette récupération est généralement réalisée, soit au moyen d'une boucle à verrouillage de fréquence, soit au moyen d'une boucle à verrouillage de phase.

Actuellement, on cherche de plus en plus à effectuer de façon numérique les traitements du signal. Lorsque le dispositif de réception est numérique, il existe de nombreuses possibilités pour effectuer la récupération de la fréquence de la porteuse. Si l'erreur sur la fréquence de la porteuse est suffisamment faible, on peut utiliser le circuit de récupération de la phase pour effectuer également la récupération de la fréquence. Dans de nombreux autres cas, il est nécessaire d'utiliser un circuit spécifique d'estimation et de correction de l'erreur sur la fréquence de la porteuse.

On distingue dans l'art antérieur deux catégories de procédés de détection de l'erreur sur la fréquence de la porteuse, selon que ces procédés mettent en oeuvre des structures bouclées ou des structures directes (c'est-à-dire à boucle ouverte).

Dans le cas des structures directes, on utilise généralement des estimateurs de fréquence. Ils fournissent une estimée de l'erreur de fréquence. Un inconvénient des structures directes est qu'elles nécessitent généralement d'effectuer des sommations sur un nombre important d'échantillons de façon que la variance de l'erreur de fréquence soit faible. Cela conduit à une complexité d'implantation élevée.

Dans le cas des structures bouclées, on utilise généralement un détecteur d'erreur de fréquence dans une boucle à verrouillage de fréquence. A la différence des estimateurs de fréquence, les détecteurs d'erreur de fréquence ne fournissent pas une estimée de l'erreur, mais une fonction de l'erreur. On distingue dans l'art antérieur deux principaux types de détecteurs. Un premier type utilise le principe du maximum de vraisemblance et se fonde sur les spectres des signaux. Un second type utilise comme détecteur un estimateur de fréquence et se fonde sur les valeurs temporelles de la différence entre deux échantillons.

Les détecteurs d'erreur de fréquence connus ont les inconvénients suivants : ceux du premier type précité conduisent à des variances d'erreur de fréquence élevées, qui dégradent considérablement les performances du circuit de récupération de phase. Les détecteurs du second type précité présentent l'inconvénient suivant : pour fournir des résultats satisfaisants, ils nécessitent généralement d'effectuer une sommation préalable sur les différences entre deux échantillons, ce qui conduit à une complexité d'implantation élevée.

La présente invention a pour objectif de s'affranchir des inconvénients mentionnés précédemment. Afin d'atteindre cet objectif, la présente invention propose un procédé de détection de l'erreur sur la fréquence d'une porteuse modulée en phase selon un nombre M d'états de phase de la modulation (MDP-M), suivant lequel, après récupération d'horloge, échantillonnage et numérisation des coordonnées en phase et en quadrature des échantillons :

(a) on ramène la phase $\psi(n)$ des échantillons à l'intervalle $[-\pi, +\pi[$ ;

(b) pour éliminer la modulation, on calcule une suite $\phi(n) = \mod(\psi(n), 2\pi/M)$, où $\mod(x, 2\pi/M)$ est obtenu à partir de x en en retranchant ou en y ajoutant $2\pi/M$ jusqu'à ce que la valeur obtenue soit comprise dans l'intervalle $[-\pi/M, +\pi/M[$ ;

(c) on calcule une suite

$$d(n) = \mod(\phi(n) - \phi(n-1), 2\pi/M) ;$$

(d) on calcule une suite

$$p'(n) = \mod(d(n) + p(n-1), 2\pi/M),$$

où $p(n) = \mod(p^*(n), 2\pi/M)$, où $p^*(n)$ est une suite obtenue en retranchant de $p'(n)$ la sortie courante ;

(e) on calcule une suite $d'(n) = p'(n) - p(n-1)$ ;

(f) on détermine un paramètre de fiabilité appelé "tri", défini par

$$\text{tri} = 1 \text{ si } |d'(n)| < S$$

$$\text{tri} = \beta \text{ si } |d'(n)| \geq S$$

où $\beta$ est un réel dont la valeur absolue est inférieure à 1, où S est un seuil prédéterminé et où | . | désigne la valeur absolue ;

(g) on calcule une suite det_tri(n) = $\alpha$ x p'(n) x tri, où $\alpha$ est un réel dont la valeur absolue est inférieure à 1, la suite de valeurs det_tri(n) constituant la sortie courante, représentative de l'erreur sur la fréquence de la porteuse.

Dans un mode particulier de réalisation, le seuil S est égal à $\pi$/M.

Si la modulation présente M = $2^k$ états, k étant un entier positif, éliminer la modulation à l'étape (b) ci-dessus consiste à enlever les k bits de poids ou rang le plus élevé de $\psi$(n).

Dans un mode particulier de réalisation, les réels $\alpha$ et $\beta$ sont des puissances de 2, avec $\alpha$ positif et $\beta$ négatif. A titre d'exemple non limitatif, pour M = 4 (modulation de phase à 4 états), on peut choisir $\alpha$ = 1/4 et $\beta$ = -1/2.

La présente invention propose également un dispositif de détection de l'erreur sur la fréquence d'une porteuse modulée en phase MDP-M, M étant le nombre d'états de phase de la modulation, caractérisé en ce qu'il comprend un module de calcul d'une suite de valeurs représentatives de l'erreur sur la fréquence de la porteuse.

Dans un mode de réalisation où ce dispositif est adapté pour mettre en oeuvre le procédé ci-dessus, le module de calcul de la suite det_tri(n) comprend un module de calcul disposé pour recevoir, sur une première entrée, les valeurs de la suite p'(n), quantifiées sur un nombre NBI de bits, et, sur une deuxième entrée, les valeurs de la suite d'(n), quantifiées sur un nombre NBI+1 de bits, et disposé pour fournir en sortie les valeurs de la suite det_tri(n), et ayant :

un module de sélection du bit de poids le plus fort (MSB), connecté à la deuxième entrée précitée, disposé pour fournir en sortie le bit de poids le plus fort MSB de d'(n) ;

un module de sélection du bit de poids immédiatement inférieur au bit de poids le plus fort MSB, connecté à la deuxième entrée précitée, disposé pour fournir en sortie le bit de d'(n) de poids immédiatement inférieur au bit de poids le plus fort MSB de d'(n) ;

un opérateur OU-exclusif disposé pour recevoir, sur une entrée, le bit de poids le plus fort MSB de d'(n), et sur une autre entrée, le bit de d'(n) de poids immédiatement inférieur au bit de poids le plus fort MSB de d'(n), et disposé pour effectuer une opération OU-exclusif sur ces deux bits d'entrée ;

un module de multiplication par $\alpha$, comprenant un module de décalage à droite de $\alpha_1$ bits, où $\alpha_1$ = $-\log_2\alpha$, connecté à la première entrée précitée, disposé pour fournir en sortie un premier produit E1 de p'(n) par $\alpha$ ;

un module de multiplication par $\alpha$ x $\beta$, comprenant

- un module de changement de signe, connecté à ladite première entrée, disposé pour fournir en sortie le produit de p'(n) par -1, et
- un module de décalage à droite de $\alpha_2$ bits, où $\alpha_2$ = $-\log_2(-\alpha$ x $\beta)$, connecté en sortie du module de changement de signe, disposé pour fournir en sortie le produit de -p'(n) par ($-\alpha$ x $\beta$),le module de multiplication par $\alpha$ x $\beta$ étant disposé pour fournir en sortie un second produit E2 de p'(n) par $\alpha$ x $\beta$ ; et

un module de commutation, ayant une première entrée, une deuxième entrée et une entrée de commande, disposé pour recevoir sur sa première entrée le premier produit E1, pour recevoir sur sa deuxième entrée le second produit E2, et pour recevoir sur son entrée de commande la valeur du bit de sortie de l'opérateur OU-exclusif, ce module de commutation étant agencé pour fournir en sortie les valeurs de la suite det_tri(n), qui sont égales, soit au premier produit E1, soit au second produit E2, en fonction de la valeur du bit de sortie de l'opérateur OU-exclusif.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :

- la figure 1 est un organigramme du procédé de la présente invention ;
- la figure 2 est un organigramme définissant une fonction dite "modulo $2\pi$/M" utilisée à plusieurs reprises au cours du procédé de la présente invention ;
- la figure 3 est un schéma symbolique du dispositif de la présente invention, dans un mode particulier de réalisation ; et
- la figure 4 est un schéma d'une partie du dispositif de la figure 3, dans un exemple de réalisation où S = $\pi$/M.

Dans toute la suite, on considère une porteuse modulée en phase MDP-M. Dans l'application, non limitative, à un système de démodulation cohérente, le signal destiné à être traité par le procédé et le dispositif de l'invention est obtenu à partir du signal reçu en entrée par le récepteur, après filtrage, échantillonnage et numérisation, effectués par des processus classiques. Au cours de ces traitements, il y a conversion en bande de base, génération d'un signal numérique complexe, présentant des composantes en phase et en quadrature, filtrage par le filtre adapté et correction d'erreur de synchronisation d'horloge. Le signal ainsi obtenu, destiné à être traité suivant le présent procédé, comprend un échantillon complexe par symbole.

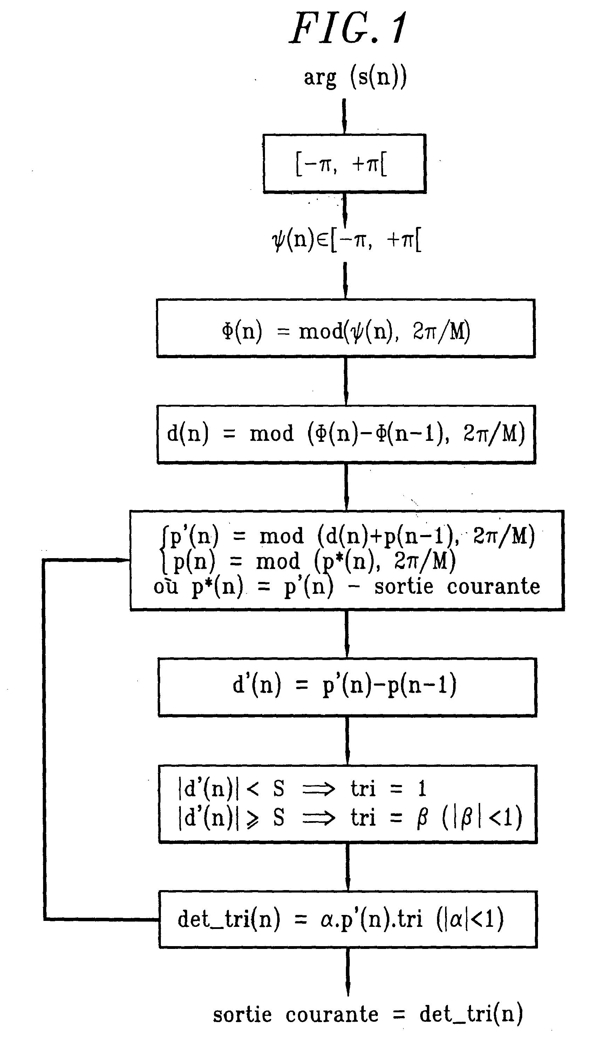

Les étapes successives du procédé selon l'invention sont décrites ci-après. Elles correspondent aux blocs successifs de l'organigramme de la figure 1.

Une première étape consiste à réduire à l'intervalle $[-\pi,+\pi[$ le domaine de définition des phases d'origine des échantillons s(n), notées arg(s(n)), où n désigne le rang de l'échantillon. On note $\psi$(n) la phase d'un échantillon après réduction du domaine de définition de celle-ci à l'intervalle $[-\pi,+\pi[$.

$\psi$(n) contient des informations sur l'erreur de fréquence porteuse et sur la modulation.

Une deuxième étape consiste à éliminer la modulation. Pour cela, on retranche ou on ajoute $2\pi/M$ à $\psi$(n) jusqu'à ce que la valeur obtenue, notée $\phi$(n), soit comprise dans l'intervalle $[-\pi/M,+\pi/M[$. Cette opération est notée $\phi(n) = \text{mod}(\psi(n),2\pi/M)$. Dans un mode particulier de réalisation où $M = 2^k$, k étant un entier positif, cette étape consiste à enlever les k bits de poids le plus élevé de $\psi$(n).

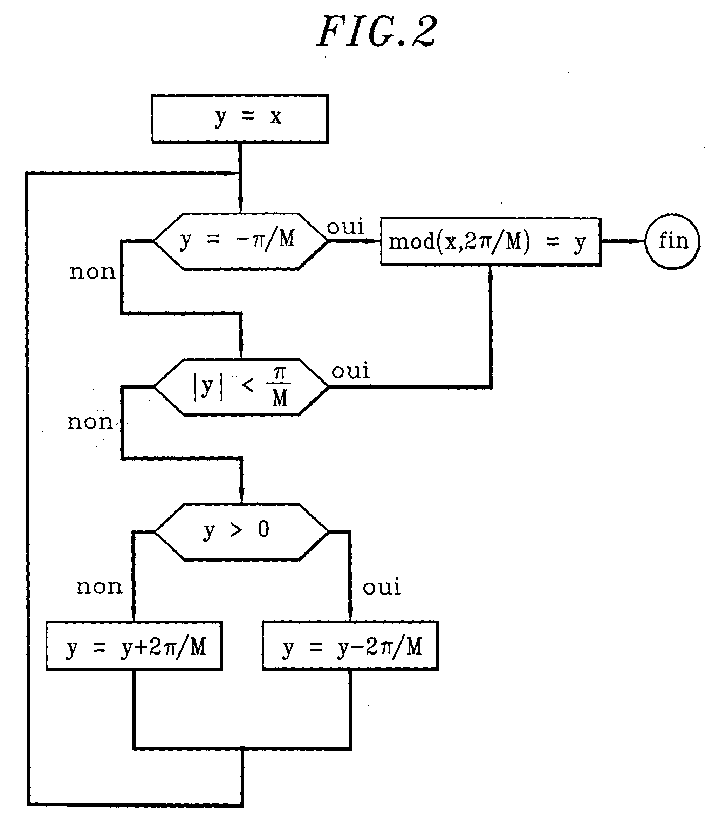

De façon générale, la fonction dite "modulo $2\pi/M$", qu'on utilisera à nouveau dans la suite et qui, recevant en entrée une variable x, fournit en sortie une variable notée $y = \text{mod}(x,2\pi/M)$, est définie par l'organigramme de la figure 2.

Comme le montre la figure 2, on teste tout d'abord si la valeur fournie en entrée à la fonction modulo $2\pi/M$ est égale à $-\pi/M$. Si c'est le cas, $\text{mod}(x,2\pi/M) = -\pi/M$ et le calcul est terminé.

Sinon, on teste si la valeur fournie en entrée à la fonction modulo $2\pi/M$ est strictement inférieure, en valeur absolue, à $\pi/M$. Si c'est le cas, la valeur fournie en sortie est égale à la valeur fournie en entrée.

Sinon, on teste si la valeur fournie en entrée est strictement positive. Si c'est le cas, on lui retranche $2\pi/M$ ; si ce n'est pas le cas, on lui ajoute $2\pi/M$ ; puis on réitère l'algorithme avec la valeur obtenue après cette soustraction ou addition de $2\pi/M$. En résumé, la fonction modulo $2\pi/M$ peut être énoncée de la façon suivante : "on retranche ou on ajoute $2\pi/M$ jusqu'à ce que la valeur obtenue soit comprise dans l'intervalle $[-\pi/M,+\pi/M[$".

Au cours d'une troisième étape du procédé selon l'invention (voir figure 1), on calcule une suite $d(n) = \text{mod}(\phi(n)-\phi(n-1),2\pi/M)$, où $\phi$(n) est la suite obtenue précédeament. d(n) est donc la différence $\phi(n)-\phi(n-1)$ ramenée dans l'intervalle $[-\pi/M,+\pi/M[$ au moyen de la fonction modulo $2\pi/M$. Cette différence est égale en moyenne à $2\pi \times \Delta f \times T$, où $\Delta f$ désigne l'erreur de fréquence porteuse et T le rythme symbole.

Au cours d'une quatrième étape, on détermine conjointement deux suites p'(n) et p(n) telles que $p'(n) = \text{mod}(d(n)+p(n-1),2\pi/M)$ et $p(n) = \text{mod}(p^*(n),2\pi/M)$, où on obtient $p^*(n)$ en retranchant de p'(n) la sortie courante.

Au cours d'une cinquième étape, on calcule une suite $d'(n) = p'(n)-p(n-1)$.

Au cours d'une sixième étape, on introduit un paramètre appelé "tri". En fonction du résultat de la comparaison de la valeur absolue de d'(n) à un seuil prédéterminé S, le paramètre "tri" prend soit la valeur 1, soit une valeur $\beta$, où $\beta$ est un réel inférieur à 1 en valeur absolue : si $|d'(n)| < S$ alors tri = 1, et si $|d'(n)| \geq S$ alors tri = $\beta$. On choisira avantageusement $S = \pi/M$.

Au cours d'une septième étape, on calcule une suite $\text{det\_tri}(n) = \alpha \times p'(n) \times \text{tri}$, où $\alpha$ est un réel inférieur à 1 en valeur absolue. La suite de valeurs det_tri(n) constitue la sortie courante, représentative de l'erreur de fréquence porteuse.

Les étapes énumérées ci-dessus peuvent être réalisées aussi bien par voie logicielle que par voie câblée et peuvent être intégrées dans un circuit spécifique de l'application (ASIC). Elles ne sont alors plus dissociables.

On va maintenant décrire, dans des modes particuliers de réalisation, le dispositif de détection d'erreur de fréquence porteuse proposé par la présente invention.

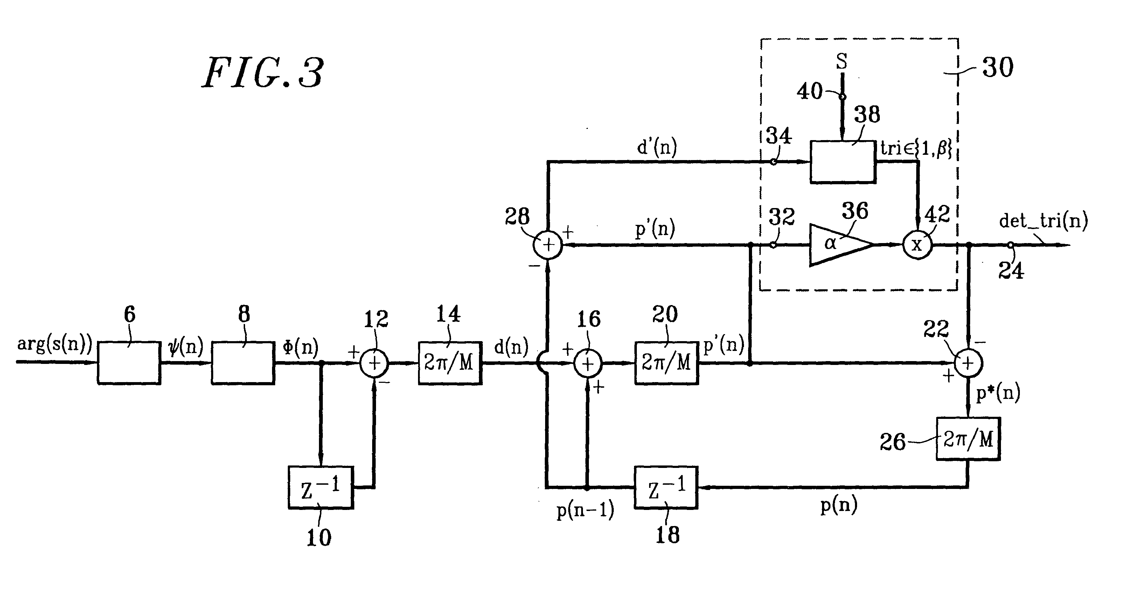

Dans un premier mode de réalisation, illustré par la figure 3, le dispositif comprend un module 6 permettant de ramener la phase des échantillons à l'intervalle $[-\pi,+\pi[$. Le module 6 reçoit en entrée une suite arg(s(n)) formée des phases d'origine des échantillons s(n) et fournit en sortie une suite $\psi$(n) de phases ramenées dans l'intervalle $[-\pi,+\pi[$.

La sortie $\psi$(n) du module 6 est connectée à l'entrée d'un module 8 d'élimination de la modulation. Le module 8 fournit en sortie une suite $\phi(n) = \text{mod}(\psi(n),2\pi/M)$, où $\text{mod}(.,2\pi/M)$ est la fonction décrite plus haut.

Le dispositif comprend également un premier élément à retard 10 connecté en sortie du module 8 d'élimination de la modulation, et un premier élément soustracteur 12 ayant une première entrée connectée à la sortie du module 8 et une seconde entrée connectée à la sortie de l'élément à retard 10. L'élément soustracteur 12 fournit en sortie la suite $\phi(n)-\phi(n-1)$. La sortie de l'élément soustracteur 12 est connectée à l'entrée d'un premier module 14 de calcul de la fonction $\text{mod}(.,2\pi/M)$. Le module 14 fournit en sortie la suite $\text{mod}(\phi(n)-\phi(n-1),2\pi/M)$, notée d(n).

Le dispositif comprend de plus un élément additionneur 16 ayant une première entrée connectée à la sortie du module 14 et une deuxième entrée connectée à la sortie d'un deuxième élément à retard 18. La sortie de l'élément additionneur 16 est connectée à l'entrée d'un deuxième module 20 de calcul de la fonction $\text{mod}(.,2\pi/M)$. Le module 20 fournit en sortie une suite p'(n). Le dispositif comprend en outre un deuxième élément soustracteur 22 ayant une première entrée connectée à la sortie du module 20 et une seconde entrée connectée à la sortie courante 24 du dispositif. L'élément soustracteur 22 fournit en sortie la suite "p'(n) - sortie courante", notée $p^*(n)$. La sortie de l'élément soustracteur 22 est connectée à l'entrée d'un troisième module 26 de calcul de la fonction $\text{mod}(.,2\pi/M)$. Le module 26 fournit en sortie la suite $\text{mod}(p^*(n),2\pi/M)$, notée p(n). La sortie du module 26 est connectée à l'entrée de l'élément à retard 18.

Dans un mode particulier de réalisation, l'ensemble comprenant l'élément soustracteur 12 et le module 14, l'ensemble comprenant l'élément soustracteur 22 et le module 26 et l'ensemble comprenant l'élément additionneur 16 et le module 20 peuvent être réalisés sous la forme d'un module éventuellement commun d'addition en complément à 2 sans bit de retenue, moyennant un module préalable de changement de signe pour les deux ensembles comportant un élément soustracteur.

L'élément à retard 18 fournit en sortie la suite p(n-1). Le dispositif comprend également un troisième élément soustracteur 28 ayant une première entrée connectée à la sortie du module 20 et une seconde entrée connectée à la sortie de l'élément à retard 18. L'élément soustracteur 28 fournit en sortie la suite p'(n)-p(n-1), notée d'(n).

Le dispositif comprend enfin un module de calcul 30 ayant une première entrée 32 connectée à la sortie du module 20 et une seconde entrée 34 connectée à la sortie de l'élément soustracteur 28. La sortie du module de calcul 30 est la sortie courante 24 du dispositif.

Dans le mode particulier de réalisation illustré par la figure 3, le module de calcul 30 comprend un module 36 d'amplification par un facteur $\alpha$, $\alpha$ étant un réel inférieur à 1 en valeur absolue. L'entrée du module 36 est connectée à l'entrée 32 du module de calcul 30. Le module 36 reçoit en entrée la suite p'(n) et fournit en sortie la suite $\alpha$ x p'(n).

Le module de calcul 30 comprend également un module 38 de comparaison et de calcul, ayant une entrée connectée à l'entrée 34 du module de calcul 30 et ayant une entrée de commande 40. Le module 38 reçoit sur l'entrée 34 la suite d'(n) et reçoit sur l'entrée de commande 40 une valeur seuil S prédéterminée. Le module 38 comporte un module permettant de calculer |d'(n)| et de comparer sa valeur au seuil S. Le module 38 fournit en sortie un paramètre tri dont la valeur dépend du résultat de cette comparaison : si |d'(n)| < S alors tri = 1 et si |d'(n)| $\geq$ S alors tri = β, où β est un réel inférieur à 1 en valeur absolue.

Le module de calcul 30 comprend de plus un élément multiplicateur 42 ayant une première entrée connectée à la sortie du module 36 et une seconde entrée connectée à la sortie du module 38. La sortie de l'élément multiplicateur 42 est connectée à la sortie du module de calcul 30. L'élément multiplicateur 42 fournit en sortie le produit $\alpha$ x p'(n) x tri, noté det_tri(n) et constituant la sortie courante du dispositif. Pour plus de clarté, le module de calcul 30 a été décrit et représenté sous la forme de trois parties individualisées (modules 36, 38 et élément 42). Cette séparation en trois parties est arbitraire, le module de calcul 30 pouvant comporter, soit plus de trois entités distinctes, soit des éléments non dissociables.

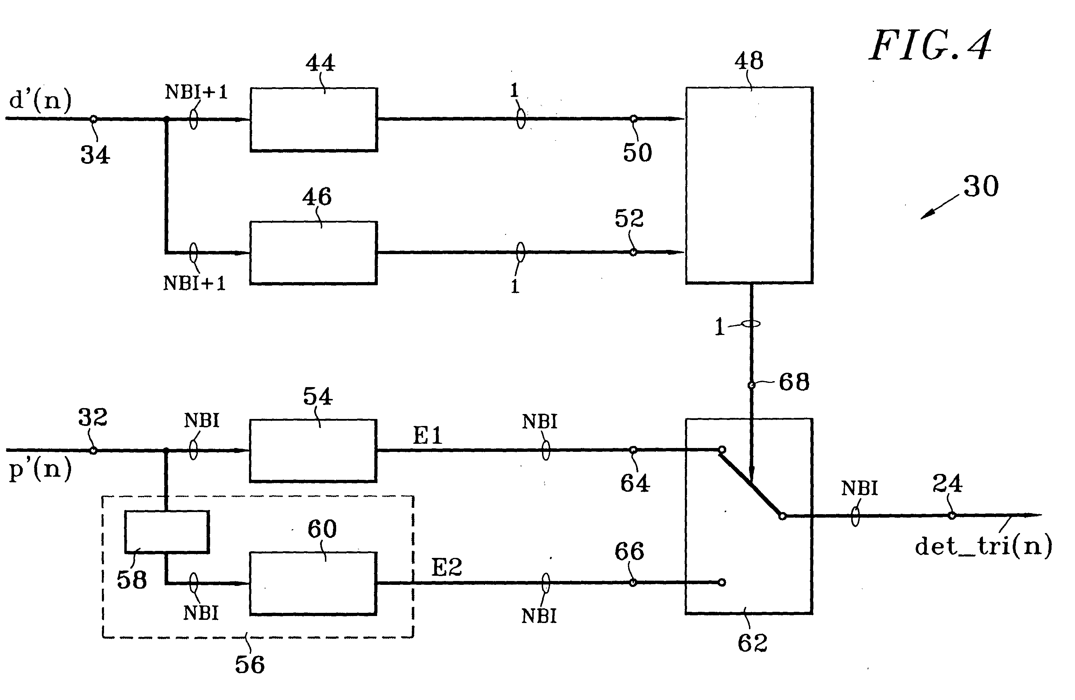

La figure 4 représente un exemple non limitatif de réalisation du module de calcul 30 pour S = $\pi$/M, S étant le seuil défini plus haut. Notons NBI le nombre de bits sur lequel les valeurs de la suite p'(n), fournies à l'entrée 32 du module 30, sont quantifiées. Dans l'exemple non limitatif de la figure 4, les valeurs de la suite d'(n), fournies à l'entrée 34 du module 30, sont quantifiées sur NBI+1 bits. Un module 44 de sélection du bit de poids le plus fort (MSB) est connecté à l'entrée 34. Le module 44 reçoit en encrée les valeurs de la suite d'(n) et fournit en sortie le MSB de d'(n).

Un module 46 de sélection du bit de poids immédiatement inférieur au MSB est également connecté à l'entrée 34. Le mcdule 46 reçoit en entrée les valeurs de la suite d'(n) et fournit en sortie le bit de d'(n) de poids immédiatement inférieur au MSB.

Le module de calcul 30 illustré par la figure 4 comprend également un opérateur OU-exclusif 48 ayant une entrée 50 connectée à la sortie du module 44 et une entrée 52 connectée à la sortie du module 46. L'opérateur OU-exclusif 48 reçoit en entrée le MSB de d'(n) et le bit de d'(n) de poids immédiatement inférieur au MSB et fournit en sortie le résultat de l'opération OU-exclusif sur ces deux bits d'entrée. L'inégalité |d'(n)| < $\pi$/M se traduit par l'égalité des deux bits précités de d'(n). La sortie de l'opérateur OU-exclusif est alors un "0" logique. De façon analogue, si |d'(n)| $\geq$ $\pi$/M alors la sortie de l'opérateur OU-exclusif est un "1" logique.

Un module 54 de multiplication par $\alpha$ est connecté à l'entrée 32 du module de calcul 30. Le module 54 reçoit en entrée les valeurs de la suite p'(n) et fournit en sortie une valeur E1 = p'(n) x $\alpha$, quantifiée sur NBI bits. Le module 54 comprend généralement un registre à décalage permettant d'effectuer un décalage à droite de $\alpha_1$ bits, où $\alpha_1$ = -$\log_2\alpha$.

Un module 56 de multiplication par $\alpha$ x β est également connecté à l'entrée 32 du module de calcul 30. Dans le mode particulier de réalisation de la figure 4, le module 56 comprend tout d'abord un module 58 de changement de signe connecté à l'entrée 32 et fournissant en sortie la suite -p'(n), quantifiée sur NBI bits. Le module 56 comprend également un module 60, connecté en sortie du module 58. Le module 60 comporte généralement un registre à décalage permettant d'effectuer un décalage à droite de $\alpha_2$ bits, où $\alpha_2$ = -$\log_2$(-$\alpha$ x β). Le module 56 fournit en sortie une valeur E2 = p'(n) . $\alpha$ x β, quantifiée sur NBI bits.

Le module de calcul 30 comprend enfin un module de commutation 62 ayant une première entrée 64 connectée à la sortie du module 54, une deuxième entrée 66 connectée à la sortie du module 56 et une entrée de commande 68 connectée à la sortie de l'opérateur OU-exclusif 48. Le module 62 reçoit sur son entrée 64 la valeur E1, sur son entrée 66 la valeur E2, et sur son entrée de commande le bit de sortie de l'opérateur OU-exclusif 48. Suivant la valeur de ce bit, le module 62 commute sur son entrée E1 ou son entrée E2. Sur la figure 4, le module 62 a été représenté de façon arbitraire dans la position commutée sur l'entrée E1.

Le module 62 peut être réalisé sous la forme d'un démultiplexeur commandé par la sortie de l'opérateur OU-exclusif 48.

Le module de commutation 62 fournit en sortie la valeur Ei = $\alpha$ x p'(n) x tri, avec tri = 1 pour i = 1 et tri = $\beta$ pour i = 2. Cette valeur, notée det_tri(n), constitue la sortie courante 24 du dispositif.

## Revendications

1. Procédé de détection de l'erreur sur la fréquence d'une porteuse modulée en phase selon un nombre M d'états de phase de la modulation, suivant lequel, après récupération d'horloge, échantillonnage et numérisation des coordonnées en phase et en quadrature des échantillons :

   (a) on ramène la phase $\psi$(n) des échantillons à l'intervalle [-$\pi$, +$\pi$[ ;
   (b) pour éliminer la modulation, on calcule une suite $\phi$ (n) = mod($\psi$(n),2$\pi$/M), où mod(x,2$\pi$/M) est obtenu à partir de x en en retranchant ou en y ajoutant 2$\pi$/M jusqu'à ce que la valeur obtenue soit comprise dans l'intervalle [-$\pi$/M, +$\pi$/M[ ;
   (c) on calcule une suite

   $$d(n) = mod(\phi (n) - \phi (n-1),2\pi/M) ;$$

   (d) on calcule une suite

   $$p'(n) = mod(d(n)+p(n-1),2\pi/M),$$

   où p(n) = mod(p*(n),2$\pi$/M), où p*(n) est une suite obtenue en retranchant de p'(n) la sortie courante ;
   (e) on calcule une suite d'(n)=p'(n)-p(n-1) ;
   (f) on détermine un paramètre de fiabilité appelé "tri", défini par

   $$tri = 1 \text{ si } |d'(n)| < S$$

   $$tri = \beta \text{ si } |d'(n)| \geq S$$

   où $\beta$ est un réel dont la valeur absolue est inférieure à 1, où S est un seuil prédéterminé et où |.| désigne la valeur absolue ;
   (g) on calcule une suite det_tri(n) = $\alpha$ x p'(n) x tri, où $\alpha$ est un réel dont la valeur absolue est inférieure à 1,

   la suite de valeurs det_tri(n) constituant la sortie courante, représentative de l'erreur sur la fréquence de la porteuse.

2. Procédé selon la revendication 1, **caractérisé en ce que** le seuil S est égal à $\pi$/M.

3. Procédé selon la revendication 1 ou 2, dans lequel M=2$^k$ où k est un entier positif, **caractérisé en ce que** l'étape (b) consiste à enlever les k bits de poids le plus élevé de $\psi$(n).

4. Procédé selon la revendication 1, 2 ou 3, dans lequel $\alpha$ est positif, $\beta$ est négatif et les valeurs absolues des réels $\alpha$ et $\beta$ sont des puissances de 2.

5. Dispositif de détection de l'erreur sur la fréquence d'une porteuse modulée en phase selon un nombre M d'états de phase de la modulation, adapté pour mettre en oeuvre le procédé selon l'une quelconque des revendications 1 à 4, **caractérisé en ce que** les moyens de calcul de la suite det_tri(n) comprennent des moyens de calcul (30) agencés pour recevoir, sur une première entrée (32), les valeurs de la suite p'(n), quantifiées sur un nombre NBI de bits, et, sur une deuxième entrée (34), les valeurs de la suite d'(n), quantifiées sur un nombre NBI+1 de bits, et agencés pour fournir en sortie (24) les valeurs de la suite det_tri(n), et ayant :

   des moyens (44) de sélection du bit de poids le plus fort MSB, connectés à ladite deuxième entrée (34), agencés pour fournir en sortie le bit de poids le plus fort MSB de d'(n) ;
   des moyens (46) de sélection du bit de poids immédiatement inférieur au bit de poids le plus fort MSB, connectés à ladite deuxième entrée (34), agencés pour fournir en sortie le bit de d'(n) de poids immédiatement inférieur au bit de poids le plus fort MSB de d'(n) ;
   un opérateur OU-exclusif (48) disposé pour recevoir, sur une entrée (50), le bit de poids le plus fort MSB de d'(n), et sur une autre entrée (52), le bit de d'(n) de poids immédiatement inférieur au bit de poids le plus fort MSB de d'(n), et disposé pour effectuer une opération OU-exclusif sur ces deux bits d'entrée ;
   des moyens (54) de multiplication par $\alpha$, comprenant des moyens de décalage à droite de $\alpha_1$ bits, où $\alpha_1$ = -log$_2\alpha$, connectés à ladite première entrée (32), disposés pour fournir en sortie un premier produit E1 de p'(n) par $\alpha$ ;
   des moyens (56) de multiplication par $\alpha$ x $\beta$, comprenant

   - des moyens (58) de changement de signe, connectés à ladite première entrée (32), disposés pour fournir en sortie le produit de p'(n) par -1, et
   - des moyens (60) de décalage à droite de $\alpha_2$ bits, où
     $\alpha_2$ = -log$_2$(-$\alpha$ x $\beta$), connectés en sortie des moyens (58) de changement de signe, disposés pour fournir en sortie le produit de p'(n) par (-α x β),

les moyens (56) de multiplication par α x β disposés pour fournir en sortie un second produit E2 de p'(n) par α x β ; et

des moyens (62) de commutation, ayant une première entrée (64), une deuxième entrée (66) et une entrée de commande (68), disposés pour recevoir sur la première entrée (64) le premier produit E1, pour recevoir sur la deuxième entrée (66) le second produit E2, et pour recevoir sur l'entrée de commande (68) la valeur du bit de sortie de l'opérateur OU-exclusif (48), ces moyens (62) de commutation étant agencés pour fournir en sortie (24) les valeurs de la suite det_tri(n), qui sont égales, soit au premier produit E1, soit au second produit E2, en fonction de la valeur du bit de sortie de l'opérateur OU-exclusif (48).

## Patentansprüche

1. Verfahren zur Erfassung des Fehlers auf der Frequenz eines Trägers, der gemäß einer Zahl M von Phasenzuständen der Modulation phasenmoduliert ist, bei dem nach der Taktrückgewinnung, Abtastung und Digitalisierung der Phasenkoordinaten und Quadraturkoordinaten der Proben:

    (a) Zurückführen der Phase $\Psi$(n) der Proben auf das Intervall [-π, +π[;

    (b) zur Eliminierung der Modulation, Berechnen einer Folge $\Phi$(n)=mod($\Psi$(n), 2π/M), wobei mod (x,2π/M) ausgehend von x erhalten wird durch Abschneiden oder Hinzufügen von 2π/M bis der erhaltene Wert im Intervall [-π/M, +π/M[ enthalten ist;

    (c) Berechnen einer Folge

    $$d(n) = \text{mod}(\Phi(n) - \Phi(n-1), 2\pi/M) ;$$

    (d) Berechnen einer Folge

    $$p'(n) = \text{mod}(d(n)+p(n-1), 2\pi/M),$$

    wobei p(n) = mod(p*(n), 2π/M) wobei p*(n) eine Folge ist, die erhalten wird durch Abschneiden des laufenden Ausgangs von p'(n);

    (e) Berechnen einer Folge d'(n)=p'(n)-p(n-1);

    (f) Bestimmen eines Zuverlässigkeitsparameters, der als "tri" bezeichnet wird, definiert durch

    $$\text{tri} = 1 \text{ wen } |d'(n)| < S$$

    $$\text{tri} = \beta \text{ wenn } |d'(n)| \geq S$$

    wobei β eine reelle Zahl ist, deren Absolutwert kleiner als 1 ist, S eine vorbestimmte Schwelle ist, und |.| den Absolutwert bezeichnet;

    (g) Berechnen einer Folge det_tri(n) = α x p'(n) x tri, wobei α eine reelle Zahl ist, deren Absolutwert kleiner als 1 ist,

    wobei die Folge der Werte det_tri(n) den laufenden Ausgang bildet, der für den Fehler auf der Frequenz des Trägers repräsentativ ist.

2. Verfahren nach Anspruch 1, **dadurch gekennzeichnet, dass** die Schwelle S gleich π/M ist.

3. Verfahren nach Anspruch 1 oder 2, bei welchem M=2$^k$, wobei k eine positive ganze Zahl ist, **dadurch gekennzeichnet, dass** der Schritt (b) darin besteht die k Bits des größten Gewichts von $\Psi$(n) zu entfernen.

4. Verfahren nach Anspruch 1, 2 oder 3, bei dem α positiv ist, β negativ ist, und die Absolutwerte der reellen Zahlen α und β Potenzen von 2 sind.

5. Vorrichtung zur Erfassung des Fehlers auf der Frequenz eines Trägers, der gemäß einer Zahl M von Phasenzuständen der Modulation phasenmoduliert ist, ausgebildet zur Ausführung des Verfahrens nach einem der Ansprüche 1 bis 4, **dadurch gekennzeichnet, dass** die Mittel zur Berechnung der Folge det_tri(n) Berechnungsmittel (30) umfassen, die ausgebildet sind, um an einem ersten Eingang (32) die Werte der Folge p'(n) zu empfangen, quantifiziert auf eine Zahl NBI von Bits, und an einem zweiten Eingang (34) die Werte der Folge d'(n), quantifiziert auf eine Zahl NBI+1 von Bits, und ausgebildet, um am Ausgang (24) die Werte der Folge det_tri(n) bereitzustellen, und umfassend:

    Mittel (44) zur Auswahl des stärksten Bits MSB, verbunden mit dem zweiten Eingang (34), und ausgebildet, um am Ausgang das Bit des stärksten Gewichts MSB von d'(n) bereitzustellen;

    Mittel (46) zur Auswahl des Bits des Gewichts, welches gegenüber dem Bit des stärksten Gewichts MSB unmittelbar kleiner ist, verbunden mit dem zweiten Eingang (34), und ausgebildet um am Ausgang das Bit von d'(n) bereitzustellen, welches gegenüber dem Bit des stärksten Gewichts MSB von d'(n) im Gewicht unmittelbar kleiner ist;

ein Exklusiv-Oder-Glied (48), welches angeordnet ist, um an einem Eingang (50) das Bit des stärksten Gewichts MSB von d'(n) zu empfangen, und an einem anderen Eingang (52) das Bit von d'(n), welches gegenüber dem Bit des stärksten Gewichts MSB von d'(n) im Gewicht unmittelbar kleiner ist, und angeordnet, um bezüglich der zwei Eingangsbits einen Exklusiv-Oder-Operation durchzuführen;

Mittel (54), um mit $\alpha$ zu multiplizieren, umfassend Mittel zur Rechtsverschiebung von $\alpha_1$ Bits, wobei $\alpha_1 = -\log_2\alpha$, verbunden mit dem ersten Eingang (32), angeordnet, um am Ausgang ein erstes Produkt E1 von p'(n) mit $\alpha$ bereitzustellen;

Mittel (56), um mit $\alpha \times \beta$ zu multiplizieren, umfassend

- Mittel (58) zur Änderung des Vorzeichens, verbunden mit dem ersten Eingang (32), und angeordnet, um am Ausgang das Produkt von p'(n) mit -1 bereitzustellen, und

- Mittel (60) zur Rechtsverschiebung von $\alpha_2$ Bits, wobei $\alpha_2 = \log_2(-\alpha \times \beta)$, angeschlossen am Ausgang der Mittel (58) zur Änderung des Vorzeichens, und angeordnet, um am Ausgang das Produkt von -p'(n) mit ($-\alpha \times \beta$) bereitzustellen,

wobei die Mittel (56), um mit $\alpha \times \beta$ zu multiplizieren angeordnet sind, um am Ausgang ein zweites Produkt E2 von p'(n) mit $\alpha \times \beta$ bereitzustellen, und

Vertauschungsmittel (62), welche einen ersten Eingang (64), einen zweiten Eingang (66) und einen Steuereingang (68) haben, welche angeordnet sind, um am ersten Eingang (64) das erste Produkt E1 zu empfangen, am zweiten Eingang (66) das zweite Produkt E2, und am Steuereingang (68) den Wert des Ausgangsbits des Exklusiv-Oder-Glieds (48), wobei diese Vertauschungsmittel (62) angeordnet sind, um am Ausgang (24) die Werte der Folge det_tri(n) bereitzustellen, welche mit dem ersten Produkt E1 oder dem zweiten Produkt E2 gleich sind, als Funktion des Werts des Ausgangsbits des Exklusiv-Oder-Glieds (48).

**Claims**

1. Method for detecting the error on the frequency of a carrier which is phase-modulated according to a number M of phase states of the modulation, wherein, after clock recovery, sampling and digitizing of the in-phase and quadrature coordinates of the samples:

    (a) the phase $\psi(n)$ of the samples is restored to the interval $[-\pi, +\pi[$;
    (b) in order to suppress the modulation, a series $\phi(n) = \text{mod}(\psi(n), 2\pi/M)$ is calculated, where $\text{mod}(x, 2\pi/M)$ is obtained from x by subtracting from it or adding to it $2\pi/M$ until the value obtained lies in the interval $[-\pi/M, +\pi/M[$;
    (c) a series $d(n) = \text{mod}(\phi(n)-\phi(n-1), 2\pi/M)$ is calculated;
    (d) a series $p'(n) = \text{mod}(d(n)+p(n-1), 2\pi/M)$ is calculated, where $p(n) = \text{mod}(p^*(n), 2\pi/M)$, where $p^*(n)$ is a series obtained by subtracting the current output from p'(n) ;
    (e) a series $d'(n)= p'(n)-p(n-1)$ is calculated;
    (f) a reliability parameter, referred to as "tri" is determined, which is defined by

    $$\text{tri} = 1 \text{ if } |d'(n)| < S$$

    $$\text{tri} = \beta \text{ if } |d'(n)| \geq S$$

    where $\beta$ is a real number whose absolute value is less than 1, where S is a predetermined threshold and where $|.|$ denotes the absolute value;
    (g) a series $\text{det\_tri}(n) = \alpha \times p'(n) \times \text{tri}$ is calculated, where $\alpha$ is a real number whose absolute value is less than 1,

    the series of values $\text{det\_tri}(n)$ constituting the current output, representative of the error on the frequency of the carrier.

2. Method according to Claim 1, **characterized in that** the threshold S is equal to $\pi/M$.

3. Method according to Claim 1 or 2, wherein $M = 2^k$ where k is a positive integer, **characterized in that** the step (b) consists in removing the k most significant bits of $\psi(n)$.

4. Method according to anyone of the claims 1, 2 or 3, wherein $\alpha$ is positive, $\beta$ is negative and the absolute values of the real numbers $\alpha$ and $\beta$ are powers of 2.

5. Device for detecting the error on the frequency of a carrier which is phase-modulated according to a number M of phase states of the modulation, adapted for implementing the method according to any one of the claims 1 to 4, **characterized in that** the means for calculating the series det_tri(n) comprise computation means (30) arranged for receiving, on a first input (32), the values of the series p'(n) which are quantized- over a number NBI of bits, and, on a second input (34), the values of the series d'(n) which are quantized over a number NBI+1 of bits, and arranged for delivering as output (24) the values of the series det_tri(n), and have:

means (44) for selecting the most significant bit MSB, connected to said second input (34), arranged for delivering as output the most significant bit MSB of d'(n) ;

means (46) for selecting the bit of significance immediately less than the most significant bit MSB, connected to said second input (34), arranged for delivering as output the bit of d'(n) of significance immediately less than the most significant bit MSB of d'(n);

an exclusive OR operator (48) arranged for receiving, on an input (50), the most significant bit MSB of d'(n), and on another input (52), the bit of d'(n) of significance immediately less than the most significant bit MSB of d'(n), and arranged for performing an exclusive OR operation on these two input bits;

means (54) for multiplication by $\alpha$, which comprise means for shifting to the right by $\alpha_1$ bits, where $\alpha_1 = -\log_2\alpha$, connected to said first input (32), arranged for delivering as output a first product E1 of p'(n) by $\alpha$;

means (56) for multiplication by $\alpha x \beta$, which comprise

- means (58) for changing sign, connected to said first input (32), arranged for delivering as output the product of p'(n) by -1, and
- means (60) for shifting to the right by $\alpha_2$ bits, where $\alpha_2 = -\log_2(-\alpha \times \beta)$, connected to the output of the means (58) for changing sign, arranged for delivering as output the product of -p'(n) by $(-\alpha \times \beta)$,

the means (56) for multiplication by $\alpha \times \beta$ being arranged for delivering as output a second product E2 of p'(n) by $\alpha \times \beta$; and

switching means (62) having a first input (64), a second input (66) and a control input (68), arranged for receiving the first product E1 on the first input (64), for receiving the second product E2 on the second input (66), and for receiving the value of the output bit of the exclusive OR operator (48) on the control input (68), the switching means (62) being arranged for delivering as output (24) the values of the series det_tri(n), which are equal either to the first product E1 or to the second product E2, depending on the value of the output bit of the exclusive OR operator (48).

# *FIG.1*

arg $(s(n))$

$$[-\pi,\ +\pi[$$

$$\psi(n)\in[-\pi,\ +\pi[$$

$$\Phi(n)\ =\ \mathrm{mod}(\psi(n),\ 2\pi/M)$$

$$d(n)\ =\ \mathrm{mod}\ (\Phi(n)-\Phi(n-1),\ 2\pi/M)$$

$$\begin{cases} p'(n)\ =\ \mathrm{mod}\ (d(n)+p(n-1),\ 2\pi/M) \\ p(n)\ =\ \mathrm{mod}\ (p^*(n),\ 2\pi/M) \end{cases}$$
où $p^*(n)\ =\ p'(n)\ -\ \text{sortie courante}$

$$d'(n)\ =\ p'(n)-p(n-1)$$

$$|d'(n)|<\ S\ \implies\ \text{tri}\ =\ 1$$
$$|d'(n)|\geqslant\ S\ \implies\ \text{tri}\ =\ \beta\ (|\beta|<1)$$

$$\text{det\_tri}(n)\ =\ \alpha.p'(n).\text{tri}\ (|\alpha|<1)$$

sortie courante $=$ det_tri$(n)$

# FIG.2

*FIG.3*

FIG.4

EP 0 831 626 B1